# EUROPÄISCHE PATENTSCHRIFT

(11) **EP 0 759 520 B1**
(45) Veröffentlichungstag und Bekanntmachung des Hinweises auf die Patenterteilung: **21.11.2001**
(21) Anmeldenummer: 96112857.6
(22) Anmeldetag: 09.08.1996
(51) Int. Cl.: F16K 1/226

(54) **Dichtungsanordnung für Absperrklappen**
Sealing arrangement for butterfly valves
Arrangement d'étanchéité pour clapets d'arrêt

(30) Priorität: 17.08.1995 DE 19530224
(43) Veröffentlichungstag der Anmeldung: 26.02.1997
(73) Patentinhaber: Friatec Aktiengesellschaft, 68229 Mannheim (DE)
(72) Erfinder: Musszeyko, Toni, 66453 Gersheim (DE)
(74) Vertreter: Klose, Hans, Dipl.-Phys.

(56) Entgegenhaltungen:
- AT-B- 351 329
- CH-A- 383 104
- CH-A- 591 037
- DE-A- 2 010 632
- DE-A- 2 916 926
- DE-A- 3 800 705
- DE-C- 967 332
- FR-A- 1 255 873
- FR-A- 2 698 147
- PATENT ABSTRACTS OF JAPAN vol. 006, no. 220 (M-169), 5.November 1982 & JP-A-57 124165 (KUBOTA TEKKO KK), 2.August 1982,
- PATENT ABSTRACTS OF JAPAN vol. 009, no. 155 (M-392), 29.Juni 1985 & JP-A-60 030872 (KUBOTA TEKKO KK), 16.Februar 1985,

## Beschreibung

Die Erfindung bezieht sich auf eine Dichtungsanordnung für eine Absperrklappe und/ oder Regelklappe gemäß den im Oberbegriff des Patentanspruchs 1 angegebenen Merkmalen.

Aus der FR-A 1 255 873 ist eine derartige Dichtungsanordnung mit einem Dichtelement bekannt, welches unmittelbar mit dem Gehäuse mittels Schrauben befestigt ist. Die genannten Schrauben durchdringen das Dichtelement, wobei das Dichtelement und das Gehäuse unmittelbar aneinander liegende Bezugsflächen aufweisen. Das Dichtelement liegt bei geschlossener Klappenscheibe mit einer Dichtfläche an einer zugeordneten konischen Gegenfläche an, wobei die Dichtfläche des Dichtelements als Teil einer Kugelfläche oder sphärischen Fläche ausgebildet ist und eine im wesentlichen linienförmige Anpressung des Dichtelements an der genannten Gegenfläche vorgegeben ist. Es besteht das Problem, daß insbesondere aufgrund von Fertigungstoleranzen zwischen dem Dichtelement und dem Gehäuse im abgesperrten Zustand der Klappenscheibe Leckagen entstehen und somit die Dichtheitsanforderungen, welche zwar zwischen dem Dichtelement und der Klappenscheibe erfüllt werden, insgesamt jedoch von der Absperrklappe und / oder Regelklappe nicht erfüllt werden.

Des weiteren ist aus der DE-C-38 01 705 eine Dichtungsanordnung für eine Klappe mit einer in einem Gehäuse schwenkbar gelagerten Klappenscheibe bekannt. Ein in der Klappenscheibe oder in dem Gehäuse angeordnetes Dichtelement wirkt mit einer Anpresskraft auf eine zugeordnete Dichtfläche eines Gehäuseringes oder eines Dichtringes der Klappenscheibe. Für die Klappenscheibe ist vorzugsweise eine doppeltexzentrische Lagerung im Gehäuse vorgesehen, und infolge der Schwenkbewegung der Klappenscheibe und der hierbei erzeugten Anpresskraft erfolgt eine Abdichtung gegen den Mediumsdruck innerhalb der Klappe. Derartige Absperr- oder Regelklappen werden sowohl für flüssige als auch gasförmige Medien eingesetzt, und zwar bei hohen ebenso wie bei tiefen Temperaturen , wie beispielsweise in Fernwärmenetzen, in Heißwasser- bzw. Dampfleitungen, in Netzen für Gase, in der Verfahrenstechnik oder dergleichen. Die vorbekannte Dichtungsanordnung enthält ein Dichtelement, welches mittels eines Halterings in der Klappenscheibe eingespannt ist und mit einer konischer Dichtfläche an einer gleichfalls konischen Fläche des Gehäusesitzrings angepreßt wird. Das Dichtelement ist als eine Verbundkonstruktion ausgebildet und enthält geschlossene oder mit einem Trennstoß versehene metallische Scheiben. An wenigstens einer Seite des derart ausgebildeten Dichtungspaketes ist ein elastisch wirkender Ring in einer Kammer des Gehäusedichtringes oder der Klappenscheibe angeordnet. Für die Bearbeitung müssen die Scheiben mit einem Haftmittel verbunden werden. Die Befestigung des Dichtelements erfordert im Hinblick auf sein elastisches Verhalten infolge der weichen Dichtwerkstoffe besondere Maßnahmen. Ferner besteht bei hohen Geschwindigkeiten des Strömungsmediums und insbesondere bei agressiven Bestandteilen im Strömungsmedium die Gefahr des Ausspülens der weichen Dichtwerkstoffe.

Ferner ist aus der DE-A-29 16 926 ein Klappenventil mit einem ringförmigen Dichtelement bekannt, welches mittels eines Halte- oder Klemmringes im Gehäuse eingespannt ist. Das Dichtelement besitzt eine gewölbte Dichtfläche, an welcher die metallische Klappenscheibe mit einer konischen Dichtfläche anliegt. Zur Abdichtung des gleichfalls metallischen Dichtelements im Gehäuse ist eine Ringdichtung vorgesehen, an welcher das Dichtelement mit einer axialen Stirnfläche anliegt. Eine direkte Anlage des Dichtelements an einer zugeordneten Gehäusefläche ist nicht vorhanden. Der besondere Halte- oder Klemmring erfordert einen zusätzlichen Fertigungs- und Montageaufwand. In einer besonderen Ausgestaltung wird die Elastizität des Dichtelementes bzw. Sitzringes durch einen dünnen Steg erhöht, welcher zwischen der Dichtfläche und dem im Gehäuse eingeklemmten Teil vorgesehen ist. Die Fertigung eines derartigen Dichtelementes mit einem federelastischen Steg erfordert einen nicht unerheblichen Herstellungsaufwand.

Schließlich ist aus der AT-A-351 329 eine Absperrklappe mit einem metallischen Dichtelement bekannt, welches mittels Schrauben unmittelbar im Gehäuse befestigt ist. Die Dichtkraft des als Dichtring bezeichneten Dichtelements wird durch dessen elastische Stauchung in Umfangsrichtung hervorgerufen. Der Dichtring ist im Bereich seiner Dichtfläche dicker ausgebildet als im benachbarten Zwischenbereich, welcher bis zur Verankerung im Gehäuse reicht und axial unelastisch ausgeführt ist. Dieser Zwischenbereich ist im Falle der direkten Befestigung des Dichtelements im Gehäuse als ein stark geschwachter Steg ausgebildet. Bei der Dimensionierung einer derartigen Absperrklappe sind im Hinblick auf den genannten Steg Grenzen hinsichtlich der Belastbarkeit und Druckbeaufschlagung zu beachten.

Hiervon ausgehend liegt der Erfindung die Aufgabe zugrunde, die Dichtungsanordnung dahingehend weiterzubilden, daß die vorstehend erläuterten Schwierigkeiten vermieden werden. Ferner sollen die Kräfte zur Betätigung der Klappenscheibe optimiert werden. Die Dichtungsanordnung soll darüberhinaus eine einfache und funktionssichere Konstruktion aufweisen.

Die Lösung dieser Aufgabe erfolgt gemäß den kennzeichnenden Merkmalen des Patentanspruchs 1.

Die vorgeschlagene Dichtungsanordnung zeichnet sich durch einen funktionssicheren Aufbau aus, wobei eine linienförmige Anpressung des Dichtelements an der zugeordneten Dichtfläche gewährleistet ist. Hierdurch sind Reibungskräfte beim Schließen und Öffnen der Armatur im Vergleich mit der vorbekannten Dichtungsanordnung erheblich reduziert. Die Anlagefläche des Dichtelements ist als Teil einer Kugelfläche ausgebildet, während die zugeordnete Dichtfläche konisch ausgebildet ist. Im Rahmen der Erfindung kann das Dichtelement sowohl in der Klappenscheibe als auch im Gehäuse angeordnet sein, wobei sinngemäß die zugeordnete konische Dichtfläche, welche nachfolgend auch als Gegenfläche bezeichnet wird, im Gehäuse oder auf der Klappenscheibe angeordnet ist. Das Dichtelement ist in zweckmäßiger Weise unmittelbar auf der Klappenscheibe oder auf dem Dichtring des Gehäuses angeordnet, wobei ein besonderer Anpreßring nicht vorhanden ist. Die direkte Befestigung des Dichtelements ermöglicht in besonders zweckmäßiger Weise eine einfache Ausrichtung und Justierung des Dichtelements, wobei diesbezügliche Dichtprobleme vermieden werden. Das Dichtelement ist mittels eindeutig definierten Bezugsflächen auf der Klappenscheibe oder im Gehäuse befestigt und es wird aufgrund dieser unmittelbaren Befestigung eine verzugsfreie Montage gewährleistet. Die Bezugsfläche des Dichtelements liegt unmittelbar an der zugeordneten Bezugsfläche der Klappenscheibe oder des Gehäuses an. Im Bereich der unmittelbar aneinanderliegenden Bezugsflächen sind ferner die vorzugsweise als Schrauben ausgebildeten Verbindungsmittel angeordnet, so daß an der Einspannstelle eine direkte Anlage des Dichtelements am Gehäuse oder der Klappenscheibe gewährleistet ist und Verzerrungen vermieden werden. Eine zusätzliche Dichtung liegt nicht im Bereich der ringförmigen Einspannstelle, sondern radial nach innen oder nach außen beabstandet davon. Die Bezugsflächen und ebenso die Anlageflächen der genannten Dichtung sind vorteilhaft in unterschiedlichen Radialebenen bezogen auf die Längsachse des Dichtelements angeordnet. Das Dichtelement weist wenigstens zwei Stufen auf, wobei die eine Stufe die Einspannstelle mit den direkt aneinanderliegenden Bezugsflächen und die andere Stufe die Anlageflächen für die genannte Dichtung definiert. Ein einfacher Ein- und Ausbau in die Klappenscheibe bzw. das Gehäuse ist durchführbar. Als weiterer Vorteil sei auf die einfache Nachjustierung des Dichtringes im Hinblick auf die Anpassungsfähigkeit der Dichtfläche hingewiesen.

Es hat sich darüberhinaus als besonders zweckmäßig erwiesen, daß zur Optimierung der Reibkräfte die Werkstoffe für das Dichtelement einerseits und für die Sitzfläche andererseits, vor allem im Hinblick auf die betrieblichen Bedingungen den Erfordernissen entsprechend vorgegeben werden können. In besonders zweckmäßiger Weise sind Materialpaarungen mit erhöhter Härtedifferenz möglich, wobei Härtedifferenzen größer als 40 HB bis über 220 HB vorgebbar sind. Es sei ausdrücklich festgehalten, daß das Dichtelement aus einem metallischen Werkstoff besteht, wobei entsprechend den zu erwarteten Mediums- und/oder Temperaturbeanspruchungen ein für die jeweiligen Randbedingungen geeigneter Werkstoff vorgesehen wird. Als Werkstoff für das Dichtelement gelangt vorzugsweise Metall zum Einsatz, doch können im Rahmen der Erfindung auch andere Werkstoffe, wie Keramik oder Kunststoff oder dergleichen zum Einsatz kommen. Insbesondere gelangen aber keine Werkstoffe mit hoher Federelastizität oder gar Kunststoffe oder Elastomere zum Einsatz. Vielmehr wird das Dichtelement aus einem Werkstoff mit vergleichsweise großer Härte und/oder praktisch ohne federelastische Eigenschaften vorgesehen.

In einer zweckmäßigen Ausgestaltung der Erfindung ist zwischen dem Dichtelement und der Klappenscheibe bwz. dem Gehäuse wenigstens eine gekammerte Weichdichtung angeordnet. Aufgrund der Kammerung der Weichdichtung ist deren eigentliche Dichtwerkstoff nicht den Belastungen durch Strömungskräfte ausgesetzt und ein Ausspülen, wie es bei Verbunddichtungen möglich ist, wird funktionssicher unterbunden. Der Werkstoff der Weichdichtung wird in Abhängigkeit der Einsatztemperatur der Armatur bzw. Klappe vorgegeben. Zur Kammerung der Weichdichtung besitzt die Klappenscheibe oder das Gehäuse bzw. ein mit dem Gehäuse verbundener Gehäusering einen Steg, Ring und/oder dergleichen, welcher im wesentlichen in der gleichen Radialebene wie die Weichdichtung angeordnet ist. Der Steg oder Ringbund reicht in einer insbesondere axialen Stirnfläche praktisch bis zu der axial gegenüberliegenden Gegenfläche auf dem Gehäuse bzw. dem Gehäusering oder entsprechend auf dem Dichtelement. Es ist somit eine hinterschnittene und vom Eindringen des Mediums weitgehend geschützte Kammer zur Aufnahme der Weichdichtung in besonders zweckmäßiger Weise und ohne besonderen Fertigungsaufwand oder Materialaufwand geschaffen.

Besondere Ausgestaltungen und Weiterbildungen der Erfindung sind in den Unteransprüche angegeben.

Die Erfindung wird nachfolgend anhand der in der Zeichnung dargestellten Ausführungsbeispiele näher erläutert. Es zeigen:
- Fig. 1: schematisch in einem axialen Längsschnitt die doppelt-exzentrisch gelagerte Klappenscheibe mit dem Dichtelement,
- Fig. 2: schematisch die Anordnung des Dichtelements unmittelbar im Gehäuse.

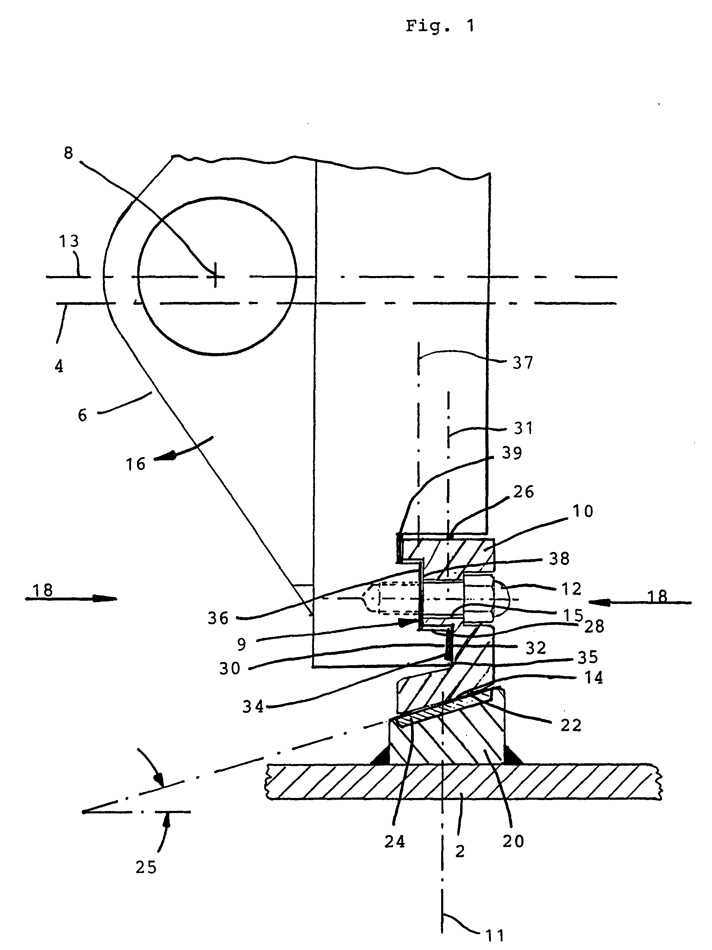

Fig. 1 zeigt schematisch einen Längsschnitt durch ein Gehäuse 2 einer Klappe, die als Absperrklappe und/oder Regelklappe ausgebildet und in bekannter Weise in eine Rohrleitung eingebaut ist und eine Längsachse 4 aufweist. Im Gehäuse 2 ist eine Klappenscheibe 6 doppelt- exzentrisch um eine Achse 8 schwenkbar angeordnet. Mit der Klappenscheibe 6 ist in einem ringförmigen Einspannbereich 9 unmittelbar, also ohne einen zusätzlichen Anpreßring, ein Dichtelement 10 mittels Schrauben 12 befestigt, wobei über den Umfang des ringförmigen Dichtelements 10 verteilt eine Anzahl derartiger Schrauben 12 vorgesehen ist. Der Einspannbereich 9 liegt in einer Radialebene 11, bezogen auf die Längsachse 13 der Klappenscheibe. Das Dichtelement 10 besitzt eine erste sphärische Dichtfläche 14, welche einem Ausschnitt einer Kugelfläche entspricht. Im Einspannbereich 9 enthält das Dichtelement 10 für die Schrauben 12 axiale Bohrungen 15. Diese Bohrungen weisen einen Durchmesser größer als die Schrauben 12 auf, um erfindungsgemäß die radiale Justierung des Dichtelements 10 zu ermöglichen. Die Klappenscheibe 6 kann um die Achse 8 in Richtung des Pfeiles 16 aufgeschwenkt werden, wobei für ein strömendes Medium mit dem Pfeil 18 die Strömungsrichtung angegeben ist, wobei das Medium bedarfsweise in der einen oder anderen Richtung das Gehäuse 2 der Klappe durchströmt.

Das Gehäuse 2 enthält einen Gehäusering 20 mit einer Gegen- bzw. Sitzfläche 22 für die kugelförmige Dichtfläche 14 des Dichtelements 10. In besonders zweckmäßiger Weise ist die Sitzfläche 22 konisch ausgebildet, wobei die Kegelspitze auf der Längsachse 4 liegt, und zwar auf der anderen Seite als die Schwenkachse 8, bezogen auf eine durch das Dichtelement 10 vorlaufende Querebene. Wie ersichtlich, steht in der geschlossenen Position der Klappenscheibe 6 die Radialebene 11 bzw. das Dichtelement 10 orthogonal zur Längsachse bzw. Symmetrieachse 4 des Gehäuses 2. Der Kugel-Mittelpunkt der ersten Dichtfläche 14 befindet sich bezüglich der genannten Ebene auf der gleichen Seite wie die Schwenkachse 8 der Klappenscheibe 6. Durch die kugelförmige Ausbildung der Dichtfläche 14 des Dichtelements 10 einerseits und die konische Ausbildung der Gegen- bzw. Sitzfläche 22 andererseits wird eine linienförmige Anpressung gewährleistet und Reibungskräfte beim Schließen und/oder Öffnen sind auf ein Minimum reduziert.

Durch die unmittelbare Befestigung des als Ring ausgebildeten Dichtelements 10 auf der Klappenscheibe wird in Verbindung mit der doppelexzentrischen Lagerung der Klappenscheibe eine linienförmige Anpressung gewährleistet. Ferner ist von Bedeutung, daß das Anordnungssystem, also die Achse 13, orthogonal zur Radialebene durch die konische Gegenfläche 22 verläuft. Es ist eine symmetrische Anordnung geschaffen, gemäß welcher die Längsachse 13 ebenso wie die Konusachse 4 orthogonal zu der Ebene, nämlich der Radialebene, verlaufen, in welcher die konische Gegenfläche liegt. Das ringförmige Dichtelement 10 ist bezüglich der Klappenscheibe 6 in radialer Richtung justierbar. Zur Justierung wird die Klappenscheibe bei noch nicht vollständig festgezogenen Schrauben 12 in die geschlossene Position geschwenkt, so daß das Dichtelement 10 zur Anlage an die konische Gegenfläche gelangt und somit automatisch bezüglich der Gegenfläche 22 justiert wird. Durch endgültiges Festziehen der Schrauben 12 wird die Justierung abgeschlossen. Wie nachfolgend noch zu erläutern ist, liegt im Einspannbereich 9 das Dichtelement 10 mit einer ringförmigen Bezugsfläche unmittelbar an der axial gegenüberliegenden Bezugsfläche der Klappenscheibe 6 an.

Die konische Gegenfläche 22 ist in zweckmäßiger Weise Bestandteil eines zusätzlichen Ringes 24, welcher mit dem Gehäusering 20 in hier nicht dargestellter Weise verbunden ist. Somit kann bevorzugt die Materialsauswahl entsprechend dem jeweiligen Einsatzzweck und/oder Strömungsmedium vorgenommen werden. Sowohl das Dichtelement 10 als auch der zusätzliche Ring 24 können aus den erforderlichen Werkstoffen hergestellt sein und in die im übrigen unverändert ausgeführte Armatur eingebaut werden. Das Dichtelement 10 besteht insbesondere aus einem metallischen Werkstoff und es können Materialpaarungen mit vergleichsweise hoher Härtedifferenz vorgegeben werden. Im Rahmen der Erfindung kann das Dichtelement 10 ferner aus anderen Werkstoffen bestehen, wobei hier vor allem auf Kunststoffe und keramische Werkstoffe verwiesen sei, welche die für den jeweiligen Einsatzzweck erforderlichen Materialeigenschaften besitzen. In zweckmäßiger Weise liegt die Härtedifferenz im Bereich von wenigstens 30 HB, zweckmäßig größer als 40 HB bis über 200 HB und vorzugweise bis über 220 HB. In besonderen Ausführungsformen kann die Härtedifferenz auch größer als 220 HB vorgegeben werden. Für die Gegenfläche 22 und/oder den zusätzlichen Ring 24 können im Rahmen der Erfindung auch nichtmetallische Werkstoffe vorgesehen werden. Vorzugsweise gelangen NIRO-Werkstoffe, halbgepanzerte Werkstoffe, Bundmetalle sowohl für das Dichtelement 10 als auch die Gegenfläche 22 zum Einsatz, welche bedarfsweise auch aus einem nichtmetallischen Werkstoff bestehen kann. Es sei festgehalten, daß alternativ zu der hier dargestellten Ausführungsform die Gegen- oder Sitzfläche 22 auch unmittelbarer Bestandteil des Gehäuserings 20 sein kann. Das Dichtelement 10, der zusätzliche Ring 24 bzw. der Gehäusering 20 können durch Schmieden, Walzen, Gießen oder nach einem sonstigen werkstoffspezifischen Verfahren hergestellt sein.

Die konische Dicht- oder Gegenfläche 22 ist in einem vorgegebenen Winkel 25 bezüglich der Symmetrie- oder Längsachse 4 des Gehäuses 2 angeordnet. Der Winkel 25 liegt erfindungsgemäß im Bereich zwischen 14° bis 30°. Hierdurch ist in besonders zweckmäßiger Weise unter Berücksichtigung der möglichen Nennweiten der Klappen die Voraussetzung für eine linienförmige Anpressung des Dichtelements geschaffen. Die erfindungsgemäß ausgebildeten Klappen werden vorzugsweise für Nennweiten DN von 200 bis 1600 mm dimensioniert und gefertigt. Für diese Nennweiten wird der genannte Winkelbereich eingehalten.

Die Klappenscheibe 6 enthält auf ihrer der Drehachse 8 abgewandten Seite eine Ausnehmung 26, in welcher, wie ersichtlich, das Dichtelement 10 angeordnet ist. Diese Ausnehmung 26 enthält wenigstens eine Stufe 28 sowie eine daran anschließende erste Anlagefläche 30, welche vorzugsweise in einer zur Längsachse 13 orthogonalen erste Ebene 31 liegt. Der ersten Anlagefläche 30 axial gegenüber ist eine Anlagefläche 32 des Dichtelements vorgesehen und dazwischen ist eine Dichtung 34 angeordnet, welche vorzugsweise als eine gekammerte Weichdichtung ausgebildet ist. Insoweit weist die Klappenscheibe 6 einen Steg 35 auf, welcher im wesentlichen in der gleichen Radialebene wie die Dichtung 34 liegt und praktisch bis an die axial gegenüberliegende Fläche des Dichtelements 10 reicht. Die somit gekammerte Dichtung ist in einem hinterschnittenen Bereich angeordnet und der Steg 35 verhindert weitestgehend das Eindringen des strömenden Mediums in diesen Bereich und somit zur Dichtung 34. Alternativ zu der gezeigten Ausführungsform kann der Steg oder ein Ringbund oder dergleichen in analoger Weise auf dem Dichtelement 10 angeordnet sein. Unabhängig von der jeweiligen konstruktiven Ausgestaltung wird mittels des Steges, Rindbundes oder dergleichen die Beaufschlagung der Dichtung 34 durch das Medium geschützt.

An der Einspannstelle 9, in welcher erfindungsgemäß die Schrauben 12 über den Umfang verteilt liegen, sind weiterhin einander gegenüberliegende Bezugsflächen 36, 38 zum einen auf der Klappenscheibe 6 und zum anderen am Dichtelement 10 vorgesehen. Die Bezugsflächen 36, 38 liegen in einer zweiten gemeinsamen Ebene 37 orthogonal zur Längsachse 13 der Klappenscheibe 6. Diese zweite Ebene 37 weist einen vorgegebenen axialen Abstand zur ersten Radialebene 31 und/oder der dort vorgesehenen Dichtung 34 auf. Die dicht aneinanderliegenden Bezugsflächen 36, 38 gewährleisten eine exakte Ausrichtung und verzugsfreie Montage des Dichtelements 10 auf der Klapperischeibe 6. Wie aus der Fig. 1 unmittelbar ersichtlich, sind auf noch kleinerem Radius zusätzliche Stufen und Anlageflächen sowie eine weitere gekammerte Weichdichtung 39 vorgesehen.

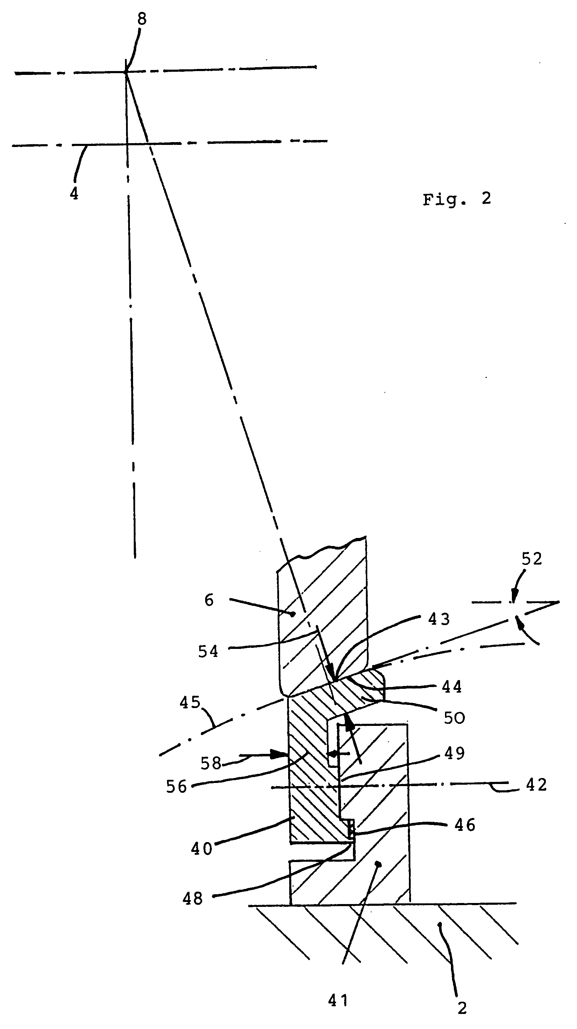

Fig. 2 zeigt schematisch eine Ausführungsform, bei welcher das Dichtelement 40 nicht auf der Klappenscheibe 6, sondern im Gehäuse 2, und zwar auf dem Gehäusering 41 angeordnet ist. Das ringförmige Dichtelement 40 ist wiederum direkt mittels Schrauben befestigt, wie es mit strichpunktierter Linie 42 angedeutet ist. Die ringförmige Dichtfläche 44 des Dichtelements 40 ist gleichfalls sphärisch derart gekrümmt, daß mit der konischen Gegenfläche 43 der Klappenscheibe 6 eine linienförmige Anpressung erreicht wird. Mittels strichpunktierter Linie 45 ist die gekrümmte oder kreisförmig ausgebildete Fläche angedeutet, deren Mittelpunkt gemäß der Zeichnung unterhalb des dargestellten Teils des Gehäuses 2 in der dargestellten Schnittebene befindet. Das ringförmige Dichtelement 40 besitzt eine sphärische Dichtfläche 44 und die Zentren oder Mittelpunkte der gekrümmten oder kreisförmigen Mantelflächen gemäß der Linie 45 liegen auf einem Kreis, der koaxial zur Längsachse 4 liegt.

Die Klappenscheibe 6 ist auch bei dieser Ausführungsform doppelt-exzentrisch gelagert und um die Achse 8 schwenkbar, welche zur Längsachse 4 beabstandet angeordnet ist. Desweiteren ist eine gekammerte Weichdichtung 46 zwischen dem Dichtelement 40 und dem Gehäusering 41 vorgesehen. Das Dichtelement 40 weist in der Radialebene der gekammerten Weichdichtung 46 einen Steg 48 auf, welcher wiederum den Zutritt des Strömungsmediums zur Weichdichtung 46 weitgehend unterbindet. Dieser Steg 48 reicht mit seiner axialen Stirnfläche praktisch unmittelbar bis an den Gehäusering 41, wobei im wesentlichen fertigungsbedingte Toleranzen zu beachten sind. Die unmittelbare feste Anlage von Dichtelement 40 und Gehäuse bzw. Gehäusering 41 erfolgt wiederum an Bezugsflächen im Bereich der Schraubenverbindung gemäß strichpunktierter Linie 42. Alternativ zu dem Steg 48 kann im Rahmen der Erfindung ein entsprechender Steg oder Ringbund oder dergleichen auf dem Gehäusering 41 vorgesehen sein. Im übrigen gelten auch für diese Ausführungsform die obigen Erläuterungen entsprechend.

Auch bei dieser Ausführungsform liegt im ringförmigen Einspannbereich 49 das Dichtelement 40 mit seiner Anlagefläche unmittelbar an der gegenüberliegenden Anlagefläche des Gehäuses an. Die Dichtung 46 ist in einer axial beabstandeten Ebene bezüglich der Ebene des Einspannbereichs 49 angeordnet. Das Dichtelement 40 enthält einen abgewinkelten Arm 50, welcher bezüglich der Längsachse 40 in einem Winkel 52 geneigt angeordnet ist. Dieser Winkel 52 ist im wesentlichen gleich groß wie der Winkel 25, in welchem die konische Gegenfläche 43 geneigt angeordnt ist. Der abgewinkelte Arm 50 besitzt eine über seine Längserstreckung im wesentlichen gleichbleibende Breite. Der in radialer Richtung anschließende Teil 56 des Dichtelements 40 besitzt eine axiale Breite 58 bis zum Einspannbereich 49. Die axiale Breite 58 entspricht im wesentlichen der Breite 54 des abgewinkelten Arms 50 des Dichtelements 40. Ausgehend vom Einspannbereich 49 besitzt das erfindunsgemäße Dichtelement keine wesentliche Querschnittsreduzierung, um federelastische Eigenschaften oder ein Stauchen zu ermöglichen. Das Dichtelement kann somit auch aus vergleichsweise harten und/oder spröden Werkstoffen gefertigt sein.

### Bezugszeichen

- 2: Gehäuse
- 4: Längsachse von 2
- 6: Klappenscheibe
- 8: Achse von 6
- 9: Einspannbereich
- 10: Dichtelement
- 11: Radialebene von 10
- 12: Schraube
- 13: Längsachse von 6
- 14: erste Dichtfläche von 10
- 15: axiale Bohrung
- 16: Pfeil/Aufschwenken von 6
- 18: Pfeil/Strömungsrichtung
- 20: Gehäusering
- 22: Gegen- oder zweite Dichtfläche
- 24: zusätzlicher Ring
- 25: Winkel
- 26: Ausnehmung
- 28: Stufe in 26
- 30: erste Anlagefläche
- 31: erste Ebene von 30
- 32: zweite Anlagefläche
- 34: Dichtung, gekammerte Weichdichtung
- 35: Steg
- 36, 38: Bezugsfläche
- 37: weite Ebene
- 39: gekammerte Weichdichtung
- 40: Dichtelement
- 41: Gehäusering
- 42: strichpunktierte Linie
- 43: konische Gegenfläche
- 44: sphärische Dichtfläche
- 45: Linie
- 46: gekammerte Weichdichtung
- 48: Steg
- 49: Einspannbereich
- 50: abgewinkelter Arm
- 52: Winkel
- 54: Breite von 50
- 56: radialer Teil von 40
- 58: axiale Breite

## Patentansprüche

1. Dichtungsanordnung für eine Absperrklappe und/oder Regelklappe, welche eine in einem Gehäuse (2), vorzugsweise doppelt exzentrisch schwenkbar gelagerte Klappenscheibe (6) aufweist, enthaltend ein Dichtelement (10; 40), welches bei geschlossener Klappenscheibe (6) mit einer Dichtfläche (14; 44) an einer zugeordneten konischen Gegenfläche (22; 43) anliegt, wobei die Dichtfläche (14; 44) des Dichtelements (10; 40) als Teil einer Kugelfläche oder sphärischen Fläche ausgebildet ist und eine im wesentlichen linienförmige Anpressung des Dichtelements (10; 40) an der genannten Gegenfläche (22; 43) vorgegeben ist und wobei das Dichtelement (10; 40) unmittelbar auf der Klappenscheibe (6) oder dem Gehäuse (2) mittels Schrauben (12; 42) befestigt ist, welche das Dichtelement (10; 40) in einem ringförmigen Einspannbereich (9) durchdringen, in welchem das Dichtelement (10; 40) einerseits und die Klappe (6) oder das Gehäuse (2) aneinanderliegende Bezugsflächen (36, 38) aufweisen,
**dadurch gekennzeichnet, daß** das Dichtelement (10; 40) einerseits und die Klappenscheibe (9) oder das Gehäuse (2) andererseits einander gegenüberliegende Anlageflächen (30, 32) aufweisen, zwischen welchen eine Dichtung (34; 46) vorgesehen ist,
**daß** zwischen den Bezugsflächen (36, 38) und den Anlageflächen (30, 32) eine Stufe (28) vorgesehen ist
und **daß** die Dichtung (34; 46) als eine gekammerte Weichdichtung ausgebildet, wobei mittels eines Steges (35; 48) oder Ringbundes eine Kammer oder ein hinterschnittener Bereich für die Dichtung (34; 46) geschaffen ist.

2. Dichtungsanordnung nach Anspruch 1, **dadurch gekennzeichnet, daß** die einander gegenüberliegenden Anlageflächen (30, 32) in Radialebenen angeordnet sind.

3. Dichtungsanordnung nach Anspruch 1 oder 2, **dadurch gekennzeichnet, daß** die Klappenscheibe (6) oder ein mit dem Gehäuse (2) verbundener Gehäusering (42) eine Ausnehmung (26) aufweisen und daß das Dichtelement (10) korrespondierend zur Ausnehmung (26) und/oder der genannten Stufe (28) ausgebildet ist.

4. Dichtungsanordnung nach einem der Ansprüche 1 bis 3, **dadurch gekennzeichnet, daß** die erste Anlagefläche (30) in einer ersten Ebene (31) angeordnet ist und daß die Bezugsflächen (36, 38) in einer zweiten Ebene (37) angeordnet sind, welche zur ersten Ebene (31) einen vorgegebenen axialen Abstand aufweist.

5. Dichtungsanordnung nach einem der Ansprüche 1 bis 4, **dadurch gekennzeichnet, daß** das Dichtelement (10; 40) einen unter einem Winkel (52) zur Längsachse (4; 13) geneigt angeordneten Arm (50) aufweist und/oder daß die Gegenfläche (22; 43) in einem vorgegebenen Winkel (25) bezüglich der Längsachse (4; 13) angeordnet ist und/oder daß der Winkel (52) des Armes (50) im wesentlichen gleich groß ist wie der Konuswinkel (25) der Gegenfläche (22; 43) und/oder daß wenigstens einer der Winkel (25; 52) im Bereich zwischen 14° bis 30° groß ist.

6. Dichtungsanordnung nach einem der Ansprüche 1 bis 5, **dadurch gekennzeichnet, daß** die Breite (54) des abgewinkelten Armes (50) des Dichtelements (40) über seine Länge im wesentlichen gleich groß ist und/oder daß die genannte Breite (54) im wesentlichen gleich groß ist wie der anschließende sich radial erstreckende Teil (56) des Dichtelements (40) und/oder daß der radiale Teil (56) des Dichtelements (40) sich vom Einspannbereich (49) bis zum abgewinkelten Arm (50) durchgehend mit dem wesentlichen gleicher axialer Breite (58) erstreckt.

7. Dichtungsanordnung nach einem der Ansprüche 1 bis 6, **dadurch gekennzeichnet, daß** zwischen dem Werkstoff des Dichtelements (10; 40) einerseits und dem Werkstoff der Gegen- oder Sitzfläche (22) andererseits eine vorgegebene Härtedifferenz vorgesehen ist und/oder daß diese Härtedifferenz wenigstens 30 HB, vorzugsweise wenigstens 40 HB beträgt und bis zu 200 HB, vorzugsweise bis über 220 HB groß ist und/oder daß das Dichtelement (10; 40) aus einem metallischen Werkstoff besteht.

## Claims

1. Sealing arrangement for a butterfly valve and/or a regulating valve which has a valve disc (6) mounted in a housing (2), preferably pivotally mounted so as to be doubly eccentric, containing a sealing element (10; 40) which rests with a sealing face (14; 44) on an associated opposing conical face (22; 43) when the valve disc (6) is closed, the sealing face (14; 44) of the sealing element (10; 40) being formed as part of a spherical seat or spherical face and substantially linear pressing of the sealing element (10; 40) on the above-mentioned opposing face (22; 43) being provided and the sealing element (10; 40) being fastened directly to the valve disc (6) or the housing (2) by means of screws (12; 42) which penetrate the sealing element (10; 40) in an annular clamping region (9) in which the sealing element (10; 40) on the one hand and the valve (6) or the housing (2) have reference faces (36, 38) which are adjacent to one another, **characterised in that** the sealing element (10; 40) on the one hand and the valve disc (9) or the housing (2) on the other hand have opposing bearing faces (30, 32) between which a seal (34; 46) is provided, **in that** a step (28) is provided between the reference faces (36, 38) and the bearing faces (30, 32), and **in that** the seal (34; 46) is designed as a partitioned soft seal, a chamber or a back cut region being created for the seal (34; 46) by means of a web (34; 48) or annular collar.

2. Sealing arrangement according to claim 1, **characterised in that** the opposing bearing faces (30, 32) are arranged in radial planes.

3. Sealing arrangement according to claim 1 or 2, **characterised in that** the valve disc (6) or a housing ring (42) connected to the housing (2) has a recess (26) and **in that** the sealing element (10) is formed so as to correspond with the recess (26) and/or the above-mentioned step (28).

4. Sealing arrangement according to one of claims 1 to 3, **characterised in that** the first bearing face (30) is arranged in a first plane (31), and **in that** the reference faces (36, 38) are arranged in a second plane (37) which is at a predetermined axial distance from the first plane (31).

5. Sealing arrangement according to any one of claims 1 to 4, **characterised in that** the sealing element (10; 40) has an arm (50) arranged at an angle (52) to the longitudinal axis (4; 13) and/or **in that** the opposing face (22; 43) is arranged at a predetermined angle (25) to the longitudinal axis (4; 13) and/or **in that** the angle (52) of the arm (50) is substantially as large as the conical angle (25) of the opposing face (22; 43) and/or **in that** at least one of the angles (25; 52) is in the range between 14□ to 30□.

6. Sealing arrangement according to any one of claims 1 to 5 **characterised in that** the width (54) of the bent arm (50) of the sealing element (40) is substantially the same size over its length and/or **in that** the above-mentioned width (54) is substantially the same size as the adjoining part (56) of the sealing element (40) extending radially and/or **in that** the radial part (56) of the sealing element (40) extends continuously from the clamping region (49) to the bent arm (50) with substantially the same axial width (58).

7. Sealing arrangement according to any one of claims 1 to 6, **characterised in that** a predetermined difference in hardness is provided between the material of the sealing element (10; 40) on the one hand and the material of the opposing face or seat (22) on the other hand and/or **in that** this difference in hardness is at least 30 B_{H} preferably at least 40 B_{H} and up to 200 B_{H}, preferably up to above 220 B_{H} and/or **in that** the sealing element (10; 40) consists of a metallic material.

## Revendications

1. Système d'étanchéité pour un clapet de fermeture et/ou de régulation, qui présente un disque (6) de clapet monté pivotant dans un boîtier (2) de préférence de manière doublement excentrique, comprenant un élément d'étanchéité (10 ; 40) qui, le disque (6) de clapet étant fermé, s'appuie avec une surface d'étanchéité (14 ; 44) contre une surface opposée conique (22 ; 43) associée, la surface d'étanchéité (14 ; 44) de l'élément d'étanchéité (10 ; 40) étant conformé en partie d'une surface sphérique et une pression sensiblement linéaire de l'élément d'étanchéité (10 ; 40) contre ladite surface opposée (22 ; 43) étant imposée, et l'élément d'étanchéité (10 ; 40) étant fixé directement sur le disque (6) de clapet ou sur le boîtier (2) au moyen de vis (12 ; 42), qui traversent l'élément d'étanchéité (10 ; 40) dans une zone de serrage (9) annulaire, dans laquelle l'élément d'étanchéité (10 ; 40) d'une part et le clapet (6) ou le boîtier (2) présentent des surfaces de référence (36 ; 38) en appui mutuel,
***caractérisé en ce que*** l'élément d'étanchéité (10 ; 40) d'une part et le disque (6) de clapet ou le boîtier (2) d'autre part présentent des surfaces d'appui opposées (30, 32) entre lesquelles est prévu un joint (34 ; 46),
***en ce qu***'entre les surfaces de référence (36, 38) et les surfaces d'appui (30, 32) est prévu un gradin (28), et
***en ce que*** le joint (34 ; 46) est conformé en joint mou compartimenté, une chambre ou une zone en contre-dépouille étant créée pour le joint (34 ; 46) au moyen d'une traverse (35 ; 48) ou d'une collerette.

2. Système d'étanchéité selon la Revendication 1, ***caractérisé en ce que*** les surfaces d'appui opposée (30, 32) sont placées dans des plans radiaux.

3. Système d'étanchéité selon la Revendication 1 ou 2, ***caractérisé en ce que*** le disque (6) de clapet ou une bague (42) de boîtier reliée au boîtier (2) présente un évidement (26) et ***en ce que*** l'élément d'étanchéité (10) est conformé de manière correspondante à l'évidement (26) et/ou audit gradin (28).

4. Système d'étanchéité selon l'une quelconque des Revendications 1 à 3, ***caractérisé en ce que*** la première surface d'appui (30) est placée dans un premier plan (31) et ***en ce que*** les surfaces de référence (36, 38) sont placées dans un deuxième plan, qui présente une distance axiale prédéterminée par rapport au premier plan (31).

5. Système d'étanchéité selon l'une quelconque des Revendications 1 à 4, ***caractérisé en ce que*** l'élément d'étanchéité (10 ; 40) présente un bras (50) incliné d'un angle (52) par rapport à l'axe longitudinal (4 ; 13) et/ou ***en ce que*** la surface opposée (22 ; 43) est placée selon un angle (25) prédéterminé par rapport à l'axe longitudinal (4 ; 13) et/ou ***en ce que*** l'angle (52) du bras (50) est sensiblement aussi grand que l'angle de cône (25) de la surface opposée (22 ; 43) et/ou ***en ce qu***'au moins l'un des angles (25 ; 52) est compris entre 14° et 30°.

6. Système d'étanchéité selon l'une quelconque des Revendications 1 à 5, ***caractérisé en ce* *que*** la largeur (54) du bras coudé (50) de l'élément d'étanchéité (40) est sensiblement identique sur toute sa longueur et/ou ***en ce que*** ladite largeur (54) est sensiblement aussi grande que la partie (56) d'extension radiale de l'élément d'étanchéité (40) qui fait suite et/ou ***en ce que*** la partie radiale (56) de l'élément d'étanchéité (40) s'étend de la zone de serrage (49) jusqu'au bras coudé (50) de manière continue avec sensiblement la même largeur axiale (58).

7. Système d'étanchéité selon l'une quelconque des Revendications 1 à 6, ***caractérisé en ce qu***'entre le matériau de l'élément d'étanchéité (10 ; 40) d'une part et le matériau de la surface d'appui ou surface opposée (22) d'autre part, il est prévu une différence de dureté prédéterminée, et/ou ***en ce que*** cette différence de dureté vaut au moins 30 HB, de préférence au moins 40 HB, et vaut jusqu'à 200 HB, de préférence jusqu'à plus de 220 HB et/ou ***en ce que*** l'élément d'étanchéité (10 ; 40) est composé d'un matériau métallique.
